# NEW EUROPEAN PATENT SPECIFICATION

(11) **EP 1 455 594 B2**
(45) Date of publication and mention of the opposition decision: **22.07.2015**
(45) Mention of the grant of the patent: 01.12.2010
(21) Application number: 02793022.1
(22) Date of filing: 13.12.2002
(51) Int. Cl.: A23K 1/18, A23L 1/0524, A23K 1/16, A23L 1/0532, A23K 1/00, A23D 9/05

(54) **A FOOD PRODUCT CONTAINING GEL CAPSULES OR TABLETS**
GELKAPSELN ODER TABLETTEN ENTHALTENDES NAHRUNGSMITTEL
PRODUIT ALIMENTAIRE CONTENANT DES COMPRIMES OU DES CAPSULES DE GEL

(30) Priority: 20.12.2001 EP 01205019
(43) Date of publication of application: 15.09.2004
(73) Proprietor: Société des Produits Nestlé S.A., 1800 Vevey (CH)
(72) Inventor: FERNANDES, Paulo, F-80000 Amiens (FR); LESPAGNOL, Lucien, F-80800 Aubigny (FR)
(74) Representative: Kingsbury, Oliver William
(86) International application number: PCT/EP2002/014287
(87) International publication number: WO 2003/053159

(56) References cited:
- EP-A- 0 479 126
- EP-A- 1 369 043
- EP-A- 1 407 678
- WO-A1-00/33673
- WO-A1-91/19424
- WO-A1-96/01103
- WO-A2-98/18346
- US-A- 4 702 921
- US-A- 4 844 918
- US-A- 5 145 697
- US-A- 5 211 980
- DATABASE WPI Section Ch, Week 198250 Derwent Publications Ltd., London, GB; Class C03, AN 1982-08347J XP002199628 & JP 57 181656 A (NISSHIN PET FOOD KK), 9 November 1982 (1982-11-09)
- PATENT ABSTRACTS OF JAPAN vol. 008, no. 273 (C-256), 13 December 1984 (1984-12-13) & JP 59 143574 A (KIRIN BEER KK;OTHERS: 01), 17 August 1984 (1984-08-17)
- 'Product information MYGLYIOL', SASOL GERMANY GMBH

## Description

The present invention concerns a retorted food or pet food product containing nutritional/nutraceutical gel capsules or tablets. sules or tablets.

The basic concept of the application "nutritional/ nutraceutical carriers" means a food which is based on knowledge concerning the relationship between food components and health. Functional foods can be potentially more efficient by maintaining the health of humans and pets.

Addition of oil, vitamins, minerals, among others, can play an important role in making foods nutritionally complete. Designated to meet the needs of medical foods, foods for special needs, and nutraceutical products, these nutrient systems assure accurate potency while nutritional requirements and consistency are maintained. They make addition of oil (for energy requirements), vitamins, minerals, amino acids, and nucleotides to food easy and convenient, eliminating the need to scale and inventory each ingredient separately. It is also important to note that encapsulation technology can be used due to the following advantages:
(a) innovative presentation of nutritional ingredients / gel caps with different colors, shapes and size diameters;
(b) nutritional value is visually perceived by the consumer which represent an added value to final products;
(c) gel capsules/tables can be used to protect nutrients from outside environment as well as potential reactors to develop reactions between nutrients (e.g. specific flavors, etc);
(d) to mask unpleasant odors and flavors in custom vitamin and mineral premixes and to prevent ingredient interactions that can decrease stability;
(e) Extra-value ingredient. Two for the price of one means extra added value to final products.

US 5145697 describes an instant, dry powdered yoghurt formulation, which comprises active yoghurt culture(s) and yoghurt powder, a mixture of xanthan and locust bean gums to provide gelling, and at least one other gel system.

JP 57181656 describes a retorted pet food comprising meat embedded in agar jelly.

JP 59143574 describes a milk drink comprising fruit juice and milk sterilised in retort or by ultra-high temperature sterilisation.

US 5211980 describes a method for producing lipid pellets for use in or as animal food supplements. The method involves providing a mixture containing at least water and an edible algin like coagulant and adding liquefied lipid thereto to form a gel-algin/water/lipid emulsion, and depositing the emulsion in discrete quantities to form pellet.

EP 0479126 describes a low calorie processed food comprising gel particles of glucomannan coagulum.

US 4702921 describes a method for preparing fish-egg-like edible products comprising capsules consisting of membranes of calcium aginate containing separate aqueous and oil phases in each capsule.

EP 369043 describes a process for preparing beads as a food additive, said beads consisting of a reticulated multivalent cation-containing acid polysaccharide and at least one water soluble and/or volatile liquid or solid active ingredient.

A first aspect of the invention provides a retorted food or pet food product containing gel capsules or tablets in an amount up to 50%, wherein the gel capsules or tablets:
(a) are based on alginate, pectate or a mixture of both;
(b) comprise oil, vitamins, amino-acids; proteins, minerals, colorants, flavours, and/or specifically targeted functional ingredients such as probiotic microorganisms, bioactive molecules, and
(c) contain up to 50% oil, up to 1.5% of a calcium salt, up to 3% of a vitamin-mineral premix;
said food product being taken in the group consisting of meat and jelly, fish and jelly, meat, jelly.

Under food product in the present specification, it is to be understood human foods and petfoods.

In addition to the alginate and pectate, it is also possible to have a minor addition of other hydrocolloids, such as carraghenate, gellan or agar. In this case, the amount of these minor ingredients does not exceed 10% of the total alginate, pectate and minor ingredients.

The technique, which is used for preparing the gel capsules, is normally encapsulation (coating). In the present specification, the tablets are prepared according to the entrapment technique. It is also possible according to the invention to have the preparation of tablets, according to the entrapment principle, said tablets being then coated, so that finally they have to be considered as capsules.

It is possible according to the invention to have a high level of gel capsules in the final product. Preferably, the content of the gel capsules is comprised between 0 and 12%. The percentages in the specification are given based on the final product and in weight.

According to a first embodiment, it is a retorted product, taken in the group consisting of meat and jelly, fish and jelly, meat, jelly. This is a typical example for the petfood area. Among the raw materials used, meat or meat by-products are all the fleshy parts of slaughtered hot-biooded animals in the fresh state or preserved by a suitable treatment, and all the products and by-products resulting from the conversion of the body or of the parts of the body of hot-blooded animals. By meat is meant, in particular, the meat of chicken, rabbits, cattle or sheep, and offal. By offal, is meant both lung lobes and livers or kidneys. By meat by-products is meant the meal obtained from carcasses of the aforementioned animals. In the present specification, fish and fish by-products are meant fish or parts of fish, in the fresh state or preserved by a suitable treatment, as well as the by-products of their conversion. Salmon, sardines or tuna may be used as fish and fish meal may be used as by-products.

In a typical retorted petfood composition, the final product is composed of 50% fish or meat and 50% jelly. The gel capsules or tablets partially replace the fish, so that, it is a target to have a nutritionally final product containing 38-45% fish or meat, 50% jelly and 5-12% gel capsules or tablets.

The gel capsules or tablets present in the food composition can be spheric or non spheric. They have normally a diameter of up to 20 mm, preferably comprised between 0.1 and 5mm.

Typically, the calcium salt is taken in the group consisting of tricalcium phosphate, calcium chloride, calcium sulphate. The oil used is taken in the group consisting of vegetable or animal oil such as palm oil, soya oil, sunflower oil, pork or beef tallow.

It is also possible according to the invention to have gel capsules or tablets with a second coating or encapsulation.

Gel entrapment is one of the most used encapsulation techniques because of its mildness, ease of operation and applicability. An hydrocolloid capsule containing nutrients (e.g.:premix: vitamins & minerals, colorants, oil, among others...) is an example of liquid/nutrient encapsulated in a spherical or non spherical polymer membrane.

The methods for making heat-stable gel capsules/tablets using either alginate or low methoxyl pectin (pectate) are following:
(a) mixing of aqueous solution of alginate/pectate + tspp with blend of oil + vitamins + minerals + colorants + flavors, etc., in order to have a stable liquid emulsion. The gel capsules are obtained by dropping the stable liquid emulsion into a calcium chloride solution (or equivalent), and instantaneous alginate gel capsules are obtained;
(b) mixing of aqueous solution of the alginate/pectate + tspp with blend of oil + vitamins + minerals + colorants + flavors, etc, in order to have a liquid stable emulsion. Some food ingredients can be added either in the frozen or dry powder forms (in this case we refer as dispersion). After, we proceed to the grinding (in an emulsifier) of the liquid stable emulsion/dispersion, calcium sulphate solution (or equivalent) is injected into the emulsifier at position of cutting system, and the final emulsion is poured into a tray or mould recepient. The gelation starts in 3-5 minutes and cutting is possible after 7-10 minutes. Cutting of the gel capsules/tablets.

Both process (a) and (b) are providing gel capsules/tablets stable to retorting at 125°C during 60 minutes.

The main problem found was that when mixing the alginate/pectate solution with the mix containg oil, vitamin-mineral premix and up to 10% triCa phosphate weak gels were almost instantaneously formed. It was found that by adding sequestrant agents this pre gelation phenomena could be avoided.

After preparation of gel capsules/tablets as mentioned above, a double coating/encapsulation can be envisaged. It corresponds to the immersion of the gel capsules/tablets in a solution of alginate, pectate or both, and after collection of the gel capsules/tablets, these are immersed in a calcium chloride solution or equivalent.

It is also possible according the invention to color the gel capsules/tablets so that the consumer can visually perceive said capsules.

The prepared gel capsules are then mixed with the corresponding product. In the retorted area, taking in account that the gel capsules support the sterilization, the mixing is made with the meat or the fish, then the filling in the can, closing of said can and a passage in the sterilisation area.

To illustrate the above mentioned applications, examples of formula and processes are presented.

**Example 1 : Alginate capsule / tablet 40% soya oil**

1.5% alginate, 0.5 % Tetra sodium pyrophosphate is dispersed in 45.5% water at room temperature for 2 minutes in a dispersor.

Then, 40% soya oil, 2% vitamin/mineral premix, 10% triCa phosphate and 0.5 lecithin + colorant and minor ingredients are dispersed under strong agitation for 3 minutes in a dispersor. The alginate/tspp solution is added to the oil mix under strong agitation for 3 minutes. The obtained emulsion is dropped into a 2% CaCl2 solution, resulting in an instantaneous gel capsule formation. The gel capsules are collected. Then, the gel capsules are mixed with fish/meat flakes and blended with gravy or jelly at about 50/50 mixing ratio and canning the food. The canned foods were retorted at 125°C for 1 hour.

### Example 2 : Alginate capsule / tablet 40% beeftallow oil

1.5% alginate, 0.5 % Tetra sodium pyrophosphate are dispersed in 45.5% water at 80°C for 2 minutes in a dispersor. 40% Beef tallow oil is melted in a water bath. A dispersion of said oil, 2% vitamin/mineral premix, 10% triCa phosphate and 0.5% lecithin + colorant and minor ingredients is prepared under strong agitation for 3 minutes in a dispersor.

The oil mix (52°C) is blended with alginate/ TSPP (80°C) and final temperature of emulsion is about 60-65°C. The emulsion obtained is dropped into a 2% CaCl2 solution, in which instantaneous gel capsule formation occurs. The gel capsules are collected. Then, the gel capsules are mixed with fish/meat flakes and blended with gravy or jelly at about 50/50 mixing ratio and canning the food. The canned foods were retorted at 125°C for 1 hour.

### Example 3 : Alginate capsule / tablet 30% sunflower oil (double coating +)

1.5% alginate, 0.5 % Tetra sodium pyrophosphate are dispersed in 58.5% water at room temperature for 2 minutes in a dispersor. Then, 30% soya oil, 1.5% vitamin/mineral premix, 7.5% triCa phosphate and 0.5 lecithin + colorant and minor ingredients are dispersed under strong agitation for 3 minutes in a dispersor. The alginate/tspp solution is added to the oil mix under strong agitation for 3 minutes. The obtained emulsion is dropped into a 2% CaCl2 solution, resulting in an instantaneous gel capsule formation. The gel capsules are collected and further dropped into a 0.5% alginate solution. The gel capsules are recollected and dropped into a 2% CaCl2 solution, in which instantaneous double gel capsule formation occurs (if needed these two steps are repeated).

Then, the gel capsules are mixed with fish/meat flakes and blended with gravy or jelly at about 50/50 mixing ratio, canning the food. The canned foods were retorted at 125°C for 1 hour.

Instead of mixing the gel capsules with flakes and gravy, the gel capsules may be dried to decrease/ control the humidity at their surface. Then, the gel capsules are mixed with dry petfood (e.g. pellets) at about 10/90 mixing ratio. The final product is packed.

### Example 4 : Pectate capsule / tablet 15% soya oil

2.5% pectate + 0.5% tetra sodium pyrophosphate are dispersed in 59.5% water at 80°C for 3 minutes in a dispersor.

Then, 15% Soya oil, 1% vitamin-mineral premix, 5% dry ingredient (e.g. carrot powder), 5% tricalcium phosphate + minor ingredients are added to pectate/TSPP solution in the preceding dispersor. Said oil/ premix/triCa + 0.5% lecithin and 3% potato starch are dispersed under strong agitation for 3 minutes in a dispersor. There is formation of an emulsion. The stable liquid emulsion is grinded using an emulsifier. Calcium sulphate solution (1.5% CaS04.2H2O, 0.016 xanthan gum, 6.48 water) is injected into the emulsifier at level of cutting system. Then, the final emulsion is poured into a tray or mould recipient. The gelation starts in 3-5 minutes and cutting is possible after 7-10 minutes. Cutting of gel capsules/tablets.

Then, the gel capsules are mixed with fish/meat flakes and blended with gravy or jelly at about 50/50 mixing ratio, canning the food. The canned foods were retorted at 125°C for 1 hour.

The gel capsules may also be collected and dropped into a 0.5% alginate solution. The gel capsules/ tablets are recollected and dropped into a 2% CaCl2 solution, in which instantaneous gel capsule formation occurs. These steps are repeated if necessary. Then, the gel capsules/tablets are mixed with fish/meat flakes and blended with gravy or jelly at about 50/50 mixing ratio, canning the food. The canned foods were retorted at 125°C for 1 hour.

## Claims

1. A retorted food or pet food product containing gel capsules or tablets in an amount of up to 50%, wherein the gel capsules or tablets:
(a) are based on alginate, pectate or a mixture of both;
(b) comprise oil, vitamins, amino-acids, proteins, minerals, colorants flavors and/or specifically targeted functional ingredients such as probiotic microorganisms, bioactive molecules; and
(c) contain up to 50% oil, up to 15% of a calcium salt, up to 3% of a vitamin-mineral premix;
said food product being taken in the group consisting of meat and jelly, fish and jelly, meat, jelly,

2. A food product according to claim 1, wherein the gel capsules have a diameter of up to 20mm, preferably comprised between 0.1 and 5 mm.

3. A food product according to claim 1 or claim 2, wherein the calcium salt is taken in the group consisting of tricalcium phosphate, calcium chloride, calcium sulphate.

4. A food product according to any preceding claim, wherein the oil is taken in the group consisting of palm oil, soya oil, sunflower oil, tallow.

## Patentansprüche

1. Mit dem Retortenverfahren behandeltes Lebensmittel- oder Tierfutterprodukt, das Gelkapseln oder Tabletten in einer Menge von bis zu 50 % enthält, wobei die Gelkapseln oder Tabletten:
(a) auf Alginat, Pectat oder einer Mischung aus beiden basieren;
(b) Öl, Vitamine, Aminosäuren, Proteine, Mineralstoff, Farbstoffe, Aromastoffe und/oder spezial anvisierte funktionelle Inhaltsstoffe wie z.B. probiotische Mikroorganismen, bioaktive Moleküle enthalten; und
(c) bis zu 50 % Öl, bis zu 15 % Calciumsalz, bis zu 3 % einer Vitamin-Mineral-Vormischung enthalten;
wobei das genannte Lebensmittelprodukt in der Gruppe bestehend aus Fleisch und Gallert, Fisch und Gallert, Fleisch, Gallert aufgenommen wird.

2. Lebensmittelprodukt nach Anspruch 1, wobei die Gelkapseln einen Durchmesser von bis zu 20 mm, vorzugsweise zwischen 0,1 und 5 mm haben.

3. Lebensmittelprodukt nach Anspruch 1 oder Anspruch 2, wobei das Calciumsalz aus der Gruppe bestehend aus Tricalciumphosphat, Calciumchlorid, Calciumsulfat genommen wird.

4. Lebensmittelprodukt nach einem vorherigen Anspruch, wobei das Öl aus der Gruppe bestehend aus Palmöl, Sojaöl, Sonnenblumenöl, Talk genommen wird.

## Revendications

1. Produit alimentaire ou produit alimentaire pour animaux domestique stérilisé en autoclave contenant des capsules de gel ou des comprimés dans une quantité jusqu'à 50 %, dans lequel les capsules de gel ou les comprimés :
(a) sont basés sur de l'alginate, du pectate ou un mélange des deux ;
(b) comprennent de l'huile, des vitamines, des acides aminés, des protéines, des minéraux, des colorants, des flaveurs et / ou des ingrédients fonctionnels ciblés spécifiquement tels que des micro-organismes probiotiques, des molécules bioactives ; et
(c) contiennent jusqu'à 50 % d'huile, jusqu'à 15 % d'un sel de calcium, jusqu'à 3 % d'un prémélange de vitamines et de minéraux ;
ledit produit alimentaire étant pris dans le groupe constitué de viande et de gelée, de poisson et de gelée, de viande, de gelée.

2. Produit alimentaire selon la revendication 1, dans lequel les capsules de gel ont un diamètre allant jusqu'à 20 mm, de préférence compris entre 0,1 et 5 mm.

3. Produit alimentaire selon la revendication 1 ou la revendication 2, dans lequel le sel de calcium est pris dans le groupe constitué de phosphate tricalcique, de chlorure de calcium, de sulfate de calcium.

4. Produit alimentaire selon l'une quelconque des revendications précédentes, dans lequel l'huile est prise dans le groupe constitué d'huile de palme, d'huile de soja, d'huile de tournesol, de suif.
